# EUROPÄISCHE PATENTSCHRIFT

(11) **EP 4 194 790 B1**
(45) Veröffentlichungstag und Bekanntmachung des Hinweises auf die Patenterteilung: **12.02.2025**
(21) Anmeldenummer: 21000351.3
(22) Anmeldetag: 13.12.2021
(51) Int. Cl.: F28D 20/00, F28F 13/00, F28D 20/02, F01K 3/00, F01K 3/18

(54) **WÄRMESPEICHERSYSTEM UND VERFAHREN ZUR WÄRMESPEICHERUNG UND -ENTNAHME**
HEAT STORAGE SYSTEM AND METHOD FOR HEAT STORAGE AND REMOVAL
SYSTÈME D'ACCUMULATION DE CHALEUR ET PROCÉDÉ D'ACCUMULATION ET D'EXTRACTION DE CHALEUR

(43) Veröffentlichungstag der Anmeldung: 14.06.2023
(73) Patentinhaber: Rowe Holding GmbH, 67547 Worms (DE)
(72) Erfinder: Zehe, Michael, 67592 Flörsheim-Dalsheim (DE)
(74) Vertreter: Leckel, Ulf

(56) Entgegenhaltungen:
- GB-A- 2 506 354
- US-A1- 2017 102 192
- US-B2- 10 644 215

## Beschreibung

Die vorliegende Erfindung betrifft ein Wärmespeichersystem aufweisend einen Speicherraum, ein Wärmespeichermedium in dem Speicherraum und eine Entnahmeeinrichtung zur Entnahme von Wärme aus dem Wärmespeichermedium, wobei die Entnahmeeinrichtung eine erste Festkörperanordnung aufweist, die mit dem Wärmespeichermedium in Kontakt steht. Darüber hinaus betrifft die vorliegende Erfindung ein Verfahren zur Wärmespeicherung und -entnahme, insbesondere zur Wärmespeicherung und -entnahme in einem entsprechenden Wärmespeichersystem.

Die EP 3 635 317 B1 beschreibt ein Latentwärmespeichersystem sowie ein Verfahren zum Betrieb desselben. Das bekannte Latentwärmespeichersystem weist einen Speicherraum in Form eines Latentwärmespeichers auf, wobei in dem Speicherraum ein Speichermedium mit latenter Wärme enthalten ist. Um die Wärme aus dem Speichermedium innerhalb des Speicherraums entnehmen zu können, führt eine Leitung von außen zu einem Wärmetauscher innerhalb des Speicherraums, während eine weitere Leitung wieder zurück von dem Wärmetauscher aus dem Speicherraum führt, wobei eine Förderpumpe zur Förderung eines Wärmeträgermediums durch die beiden Leitungen und den Wärmetauscher vorgesehen ist. Der Wärmetauscher bildet hierbei eine Festkörperanordnung, die mit dem Speichermedium innerhalb des Speicherraums in Kontakt steht, so dass die Wärme des Speichermediums über die Festkörperanordnung des Wärmetauschers an das den Wärmetauscher durchströmende Wärmeträgermedium abgegeben werden kann, das anschließend über die aus dem Speicherraum herausführende Leitung einem Verbraucher o. ä. zugeführt werden kann.

Das bekannte Latentwärmespeichersystem hat sich bewährt, weist jedoch einen relativ komplexen Aufbau auf und führt zu einem erhöhten Wartungsaufwand. Überdies ist der Wärmestrom zwischen dem Wärmespeichermedium einerseits und dem Verbraucher andererseits nur bedingt bzw. aufwendig über die Geschwindigkeit der Förderpumpe für das Wärmeträgermedium steuerbar bzw. regelbar.

Die GB 2506354 A beschreibt einen Wärmespeicher mit einem Speicherraum, einem Wärmespeichermedium in dem Speicherraum und einer Heizeinrichtung in Form eines Wärmetauschers zum Erwärmen des Wärmespeichermediums. Darüber hinaus ist ein zweiter Wärmetauscher zur Entnahme der Wärme vorgesehen, der eine erste Festkörperanordnung aus einem Gehäuse und isolierendem Material und eine zweite Festkörperanordnung aus einem Wärmetransferelement und Fluidleitungen aufweist. Die mit der ersten Festkörperanordnung in permanentem Kontakt stehende zweite Festkörperanordnung kann relativ zu der ersten Festkörperanordnung verdreht werden, um den Wärmestrom vom Wärmespeichermedium zu den Fluidleitungen zu verändern.

Es ist eine Aufgabe der vorliegenden Erfindung, ein Wärmespeichersystem, insbesondere ein Latentwärmespeichersystem, derart weiterzubilden, dass dieses einen relativ einfachen und wartungsarmen Aufbau aufweist und eine einfache Steuerung bzw. Regelung des Wärmestroms von dem Speichermedium zu einem Verbraucher ermöglicht. Darüber hinaus liegt der vorliegenden Erfindung die Aufgabe zugrunde, ein besonders einfaches Verfahren zur Wärmespeicherung und -entnahme anzugeben, insbesondere ein geeignetes Verfahren zum Betrieb des erfindungsgemäßen Wärmespeichersystems.

Diese Aufgabe wird durch die in den Patentansprüchen 1 bzw. 9 angegebenen Merkmale gelöst. Vorteilhafte Ausführungsformen der Erfindung sind Gegenstand der Unteransprüche.

Das erfindungsgemäße Wärmespeichersystem weist einen Speicherraum auf. Der Speicherraum ist vorzugsweise geschlossen ausgebildet, ohne dass dieser in einen Kreislauf eingebunden wäre. In dem Speicherraum des Wärmespeichersystems ist ein Wärmespeichermedium aufgenommen. Bei dem Wärmespeichermedium handelt es sich vorzugsweise um ein Latentwärmespeichermedium oder ein Phasenwechselmaterial, wie beispielsweise ein Salz oder Salzgemisch, so dass das Wärmespeichersystem besonders bevorzugt als Flüssigsalzspeichersystem ausgebildet ist. Das Wärmespeichersystem weist ferner eine Heizeinrichtung zum Erwärmen des Wärmespeichermediums auf. Darüber hinaus weist das Wärmespeichersystem eine Entnahmeeinrichtung zur Entnahme von Wärme aus dem Wärmespeichermedium innerhalb des Speicherraums auf. Die Entnahmeeinrichtung weist eine erste Festkörperanordnung auf, die mit dem Wärmespeichermedium innerhalb des Speicherraums in Kontakt steht, so dass Wärme von dem Wärmespeichermedium auf die erste Festkörperanordnung übertragbar ist. Die erste Festkörperanordnung kann sowohl von einem einzelnen Festkörper als auch von zwei oder mehr Festkörpern gebildet sein, die miteinander verbunden sind. Im Falle von zwei oder mehr miteinander verbundenen Festkörpern sind diese vorzugsweise derart miteinander verbunden, dass eine Wärmeübertragung zwischen allen Festkörpern durch einen Festkörperkontakt erfolgen kann. Bei einer ersten Festkörperanordnung aus zwei oder mehr Festkörpern kann auch lediglich einer der Festkörper mit dem Wärmespeichermedium in Kontakt stehen. Während bei dem Wärmespeichersystem nach der EP 3 635 317 B1 lediglich eine erste Festkörperanordnung in Form eines Wärmetauschers mitsamt Zu- und Ableitungen innerhalb des Speicherraums vorgesehen ist, die unmittelbar mit einem in dem Wärmetauscher strömenden Wärmeträgermedium zusammenwirkt, weist die Entnahmeeinrichtung bei dem erfindungsgemäßen Wärmespeichersystem ferner eine zweite Festkörperanordnung auf. Auch die zweite Festkörperanordnung kann von einem einzelnen Festkörper oder zwei oder mehr miteinander verbundenen Festkörpern gebildet sein, wobei die Festkörper bei zwei oder mehr miteinander verbundenen Festkörpern vorzugsweise derart miteinander verbunden sind, dass eine Wärmeübertragung zwischen allen Festkörpern durch einen Festkörperkontakt zwischen diesen Festkörpern erfolgen kann. Um einen Wärmestrom zwischen der ersten Festkörperanordnung und der zweiten Festkörperanordnung, von der die Wärme letztlich einem Verbraucher zugeführt werden kann, auf besonders einfache und wartungsarme Weise einstellen, regeln oder steuern zu können, wirken die erste und zweite Festkörperanordnung derart zusammen, dass ein Festkörperkontakt zwischen der ersten Festkörperanordnung und der zweiten Festkörperanordnung unter Erhöhung oder Verringerung eines Wärmestroms von der ersten Festkörperanordnung zu der zweiten Festkörperanordnung verändert werden kann. Mithin kann eine pro Zeiteinheit übertragbare Wärmemenge durch Veränderung des Festkörperkontakts erhöht oder verringert werden. Es ist lediglich eine recht einfache Mechanik erforderlich, um den Festkörperkontakt zwischen der ersten Festkörperanordnung und der zweiten Festkörperanordnung und somit den Wärmestrom ausgehend von dem Wärmespeichermedium über die erste Festkörperanordnung hin zu der zweiten Festkörperanordnung zu verändern, ohne dass hier ein wartungsintensiver Wärmetauscher mit einem im Innern fließenden Wärmeträgermedium erforderlich wäre. Die Entnahmeeinrichtung ist derart ausgebildet, dass der Festkörperkontakt zwischen der ersten Festkörperanordnung und der zweiten Festkörperanordnung aufgehoben und erzeugt werden kann. Sinngemäß kann bei dieser Ausführungsform der Festkörperkontakt beseitigt werden, um den Wärmestrom weitestgehend zu verringern. Wird hingegen ein erhöhter Wärmestrom benötigt, so kann der Festkörperkontakt zwischen der ersten und zweiten Festkörperanordnung durch die Entnahmeeinrichtung erzeugt werden. Ferner ist die Entnahmeeinrichtung derart ausgebildet, dass der Festkörperkontakt zwischen der ersten Festkörperanordnung und der zweiten Festkörperanordnung mittelbar erzeugt werden kann oder erzeugt ist. Unter einer mittelbaren Erzeugung des Festkörperkontakts ist hierbei die Zwischenschaltung eines oder weiterer Festkörper zu verstehen, die sowohl einen Festkörperkontakt zu der ersten Festkörperanordnung als auch einen Festkörperkontakt zu der zweiten Festkörperanordnung aufweisen.

In einer vorteilhaften Ausführungsform des erfindungsgemäßen Wärmespeichersystems ist die Entnahmeeinrichtung derart ausgebildet, dass der Festkörperkontakt zwischen der ersten Festkörperanordnung und der zweiten Festkörperanordnung schrittweise bzw. stufenweise verändert werden kann. Diese Ausführungsvariante ist insbesondere dann von Vorteil, wenn eine kontinuierliche Veränderung des Festkörperkontakts je nach Anwendungsfall nicht erforderlich ist. Alternativ hierzu kann jedoch die Entnahmeeinrichtung auch derart ausgebildet sein, dass der Festkörperkontakt zwischen der ersten Festkörperanordnung und der zweiten Festkörperanordnung kontinuierlich verändert werden kann.

In einer besonders vorteilhaften Ausführungsform des erfindungsgemäßen Wärmespeichersystems ist die Entnahmeeinrichtung derart ausgebildet, dass der Festkörperkontakt zwischen der ersten Festkörperanordnung und der zweiten Festkörperanordnung durch Veränderung einer Anzahl von Festkörpern veränderbar, die sowohl mit der ersten als auch mit der zweiten Festkörperanordnung in Kontakt stehen. Diese Ausführungsform ist insoweit bevorzugt, als dass die erste und zweite Festkörperanordnung grundsätzlich nicht relativ zueinander bewegt werden müssen, vielmehr müssen lediglich die vermittelnden Festkörper in eine Position überführt werden, in der diese sowohl mit der ersten als auch mit der zweiten Festkörperanordnung in Kontakt stehen oder eben nicht. Im einfachsten Fall wäre hier lediglich ein vermittelnder Festkörper erforderlich, wobei mehrere vermittelnde Festkörper dann bevorzugt sind, wenn unterschiedlich große Wärmeströme zwischen der ersten Festkörperanordnung und der zweiten Festkörperanordnung erzielt oder eingestellt werden sollen.

In einer weiteren besonders vorteilhaften Ausführungsform des erfindungsgemäßen Wärmespeichersystems weisen die erste Festkörperanordnung und die zweite Festkörperanordnung jeweils mindestens eine Oberfläche auf, über die der Festkörperkontakt mittelbar erzeugt werden kann oder erzeugt ist, um den Wärmestrom von der ersten Festkörperanordnung zu der zweiten Festkörperanordnung zu erzielen. Um einem Wärmeverlust an der Oberfläche der ersten Festkörperanordnung durch Konvektion vorzubeugen, ist sowohl die Oberfläche der ersten Festkörperanordnung als auch die Oberfläche der zweiten Festkörperanordnung in einem abgeschlossenen oder/und evakuierten Kontaktraum angeordnet. Insbesondere bei einem evakuierten Kontaktraum verhindert das Vakuum innerhalb des Kontaktraums eine Konvektion.

In einer bevorzugten Ausführungsform des erfindungsgemäßen Wärmespeichersystems ist eine dritte Festkörperanordnung vorgesehen, die mindestens einen beweglichen Festkörper aufweist. Wie bereits die erste und zweite Festkörperanordnung kann auch die dritte Festkörperanordnung von lediglich einem beweglichen Festkörper oder von zwei oder mehr beweglichen Festkörpern gebildet sein, im Gegensatz zu der ersten und zweiten Festkörperanordnung ist eine Verbindung zwischen den zwei oder mehr beweglichen Festkörpern derart, dass ein Wärmestrom allein aufgrund eines Festkörperkontakts zwischen diesen erzielt werden kann, nicht bevorzugt oder notwendig. Der mindestens eine bewegliche Festkörper kann relativ zu der ersten und zweiten Festkörperanordnung von einer ersten Stellung, in der der bewegliche Festkörper mit keiner der Oberflächen oder mit der Oberfläche lediglich einer der ersten und zweiten Festkörperanordnung in Kontakt steht, in eine zweite Stellung bewegt werden, in der der bewegliche Festkörper mit den Oberflächen der ersten und zweiten Festkörperanordnung in Kontakt steht. Es ist vorzugsweise eine Antriebseinrichtung zum Bewegen des mindestens einen beweglichen Festkörpers vorgesehen, wobei die Antriebseinrichtung besonders bevorzugt einen Antriebsmotor aufweist, beispielsweise einen Elektromotor. Um einen besonders einfachen Mechanismus zu schaffen, ist der mindestens eine bewegliche Festkörper vorzugsweise translatorisch von der ersten in die zweite Stellung verschiebbar und umgekehrt. In einer einfachsten Ausführungsvariante kann lediglich ein beweglicher Festkörper vorgesehen sein, um den mittelbaren Festkörperkontakt in der ersten Stellung aufzuheben und in der zweiten Stellung zu erzeugen. Wie bereits vorangehend angedeutet, ist es bei dieser Ausführungsform jedoch bevorzugt, wenn die dritte Festkörperanordnung mindestens zwei oder mehr bewegliche Festkörper aufweist, die unabhängig voneinander in die erste oder/und zweite Stellung bewegt werden können, um den Wärmestrom von der ersten Festkörperanordnung zu der zweiten Festkörperanordnung in drei oder mehr Stufen regulieren zu können.

In einer weiteren vorteilhaften Ausführungsform des erfindungsgemäßen Wärmespeichersystems ist der mindestens eine bewegliche Festkörper der dritten Festkörperanordnung in dem abgeschlossenen oder/und evakuierten Kontaktraum angeordnet, um mit den Oberflächen der ersten Festkörperanordnung und der zweiten Festkörperanordnung in Kontakt treten zu können oder zu stehen.

Um den Aufbau des Wärmespeichersystems, insbesondere der Entnahmeeinrichtung des Wärmespeichersystems, zu vereinfachen, sind die erste Festkörperanordnung und die zweite Festkörperanordnung in einer weiteren bevorzugten Ausführungsform des erfindungsgemäßen Wärmespeichersystems relativ zueinander unbeweglich angeordnet, zumal eine Relativbewegung zwischen der ersten und zweiten Festkörperanordnung dank der dritten Festkörperanordnung mit deren mindestens einem beweglichen Festkörper entbehrlich ist. Alternativ oder ergänzend sind die Oberflächen der ersten und zweiten Festkörperanordnung dauerhaft voneinander beabstandet, ohne dass diese unmittelbar miteinander in Kontakt treten würden.

In einer weiteren besonders bevorzugten Ausführungsform des erfindungsgemäßen Wärmespeichersystems weist die Oberfläche der ersten Festkörperanordnung mindestens einen ersten Oberflächenabschnitt und die Oberfläche der zweiten Festkörperanordnung mindestens einen zweiten Oberflächenabschnitt auf, die einander zugeordnet und zueinander schräggestellt sind, während der bewegliche Festkörper der dritten Festkörperanordnung derart keilförmig ausgebildet ist, dass dieser in der zweiten Stellung flächig mit dem ersten und zweiten Oberflächenabschnitt der ersten und zweiten Festkörperanordnung in Kontakt steht. Dank der Schrägstellung der ersten und zweiten Oberflächenabschnitte zueinander einerseits und der Keilform des beweglichen Festkörpers der dritten Festkörperanordnung andererseits kann durch eine kurze Bewegung des beweglichen Festkörpers von der ersten Stellung in die zweite Stellung ein großflächiger Kontakt mit sowohl der ersten Festkörperanordnung als auch der zweiten Festkörperanordnung erzielt werden, um den Wärmestrom zwischen der ersten Festkörperanordnung und der zweiten Festkörperanordnung zu erhöhen. Bei dieser Ausführungsform ist es bevorzugt, wenn die einander zugeordneten Oberflächenabschnitte, nämlich der erste Oberflächenabschnitt einerseits und der zugeordnete zweite Oberflächenabschnitt andererseits, einen Winkel von weniger als 60° oder weniger als 10° einschließen. Darüber hinaus ist es bevorzugt, wenn die Oberfläche der ersten oder/und zweiten Festkörperanordnung in der Art einer Mantelfläche einer Pyramide oder eines Pyramidenstumpfes geformt ist. So kann eine entsprechende Pyramide oder ein Pyramidenstumpf drei, vier oder mehr Seiten und eine entsprechende Anzahl von zugeordneten beweglichen Festkörpern der dritten Festkörperanordnung aufweisen, um eine entsprechende Abstufung des Festkörperkontakts bzw. des Wärmestroms zwischen der ersten und zweiten Festkörperanordnung zu erzielen zu können.

In einer weiteren vorteilhaften Ausführungsform des erfindungsgemäßen Wärmespeichersystems weist die erste Festkörperanordnung einen ausgangsseitigen Festkörper zur Erzielung des mittelbaren Festkörperkontakts mit der zweiten Festkörperanordnung auf. Darüber hinaus weist die erste Festkörperanordnung mindestens eine in den Speicherraum hervorstehende Strebe zur Kontaktierung des Speichermediums auf. Hierbei ist es bevorzugt, wenn die mindestens eine Strebe unmittelbar mit dem ausgangsseitigen Festkörper, der beispielsweise die vorangehend erwähnte Oberfläche aufweisen kann, in Kontakt steht. Überdies ist es bevorzugt, wenn zwei oder mehr derartige in den Speicherraum hervorstehende Streben vorgesehen sind, wobei die Streben bezogen auf den Speicherraum bzw. dessen Form vorzugsweise symmetrisch angeordnet sind. Um den Wärmeübergang von dem Speichermedium auf die Strebe der ersten Festkörperanordnung zu vereinfachen, ist die Oberfläche der in den Speicherraum hervorstehenden Strebe dadurch erhöht, dass an der Strebe hervorstehende Rippen oder Flügel angeordnet oder befestigt sind. Hierbei hat es sich als vorteilhaft herausgestellt, wenn die Rippen oder Flügel jeweils von einem mehrfach, gegebenenfalls in einer Ebene, gebogenen langgestreckten Element gebildet sind.

In einer weiteren bevorzugten Ausführungsform des erfindungsgemäßen Wärmespeichersystems weist die zweite Festkörperanordnung einen Festkörper zur Ausbildung der Innenseite eines Fluidbehälters oder einer Fluidleitung zum Erwärmen eines Fluids auf. Auf diese Weise kann die Wärme die Entnahmeeinrichtung des Wärmespeichersystems verlassen und über die Innenseite, beispielsweise einem Boden, eines Fluidbehälters oder einer Fluidleitung auf das Fluid innerhalb des Fluidbehälters oder der Fluidleitung übertragen werden, um nach der Speicherung der Wärme in dem Wärmespeichermedium des Speicherraums nunmehr verbraucht werden zu können. Man kann daher auch von einem ausgangsseitigen Festkörper der zweiten Festkörperanordnung sprechen. Dabei bildet der Festkörper vorzugsweise die Innenseite des Kessels eines Verdampfers aus, so dass das im Kessel verdampfte Fluid vorzugsweise als unter Druck stehender Dampf eine Turbine o. ä. antreiben kann.

In einer weiteren vorteilhaften Ausführungsform des erfindungsgemäßen Wärmespeichersystems ist die Heizeinrichtung zum Erwärmen des Wärmespeichermediums eine induktive Heizeinrichtung, die einen Strom, insbesondere einen hochfrequenten Wechselstrom, durch Induktion in Wärmeenergie umwandeln kann, was das Wärmespeichersystem insbesondere für die Speicherung regenerativ erzeugten Stroms interessant macht.

In einer weiteren vorteilhaften Ausführungsform des erfindungsgemäßen Wärmespeichersystems weist die Heizeinrichtung mindestens eine sich in den Speicherraum erstreckende erwärmbare Heizstrebe auf. Wie bereits bei der sich in den Speicherraum erstreckenden Strebe der ersten Festkörperanordnung ist es auch bei der Heizstrebe bevorzugt, wenn an dieser hervorstehende Rippen oder Flügel angeordnet oder befestigt sind, die überdies vorzugsweise von einem mehrfach, gegebenenfalls in einer Ebene, gebogenen langgestreckten Element gebildet sind, um die mit dem Wärmespeichermedium zusammenwirkende bzw. in Kontakt tretende Oberfläche der Heizeinrichtung zu vergrößern. Überdies ist es bei dieser Ausführungsform bevorzugt, wenn zwei oder mehr Heizstreben vorgesehen sind, wobei auch die Heizstreben - bezogen auf den Querschnitt des Speicherraums - vorzugsweise symmetrisch angeordnet sind. Es hat sich überdies gezeigt, dass es von Vorteil ist, wenn sich die Streben der ersten Festkörperanordnung und die Heizstreben der Heizeinrichtung in einander entgegengesetzte Richtungen oder Höhenrichtungen des Wärmespeichersystems in den Speicherraum erstrecken, wobei es sich in diesem Zusammenhang auch als vorteilhaft herausgestellt hat, wenn die sich in den Speicherraum erstreckenden Streben oder Heizstreben die gegenüberliegende Begrenzung des Speicherraums nicht berühren, sondern besonders bevorzugt freie Enden aufweisen.

Um Energie bzw. Wärmeverluste im Bereich der Heizeinrichtung zu vermeiden, erstreckt sich die mindestens eine Heizstrebe der Heizeinrichtung in einer weiteren bevorzugten Ausführungsform des erfindungsgemäßen Wärmespeichersystems aus dem Speicherraum in einen abgeschlossenen oder/und evakuierten Induktionsraum, in dem die Heizstrebe mit einem Induktor, vorzugsweise einer Spule, zusammenwirkt, um die Heizstrebe zu erwärmen. Dank der Anordnung der Heizstrebe und des Induktors in dem abgeschlossenen oder/und evakuierten Induktionsraum werden Wärmeverluste durch Konvektion weitgehend oder gänzlich vermieden.

In einer weiteren vorteilhaften Ausführungsform des erfindungsgemäßen Wärmespeichersystems ist das Wärmespeichersystem als Latentwärmespeichersystem mit einem Phasenwechselmaterial als Wärmespeichermedium ausgebildet. Dank des verwendeten Phasenwechselmaterials kann das Wärmespeichermedium in einem kleinen Temperaturbereich um einen Phasenwechsel, der vorzugsweise zwischen fest und flüssig erfolgt, sehr große Wärmemengen speichern. Hierbei ist es bevorzugt, wenn das Phasenwechselmaterial ein Salz oder Salzgemisch ist. Mithin ist es bei dieser Ausführungsform besonders bevorzugt, wenn der Speicherraum mit dem darin enthaltenen Wärmespeichermedium einen Flüssigsalzwärmespeicher bildet.

Wie bereits vorangehend dargelegt, ist die erste Festkörperanordnung oder/und die zweite Festkörperanordnung oder/und die dritte Festkörperanordnung in einer weiteren bevorzugten Ausführungsform des erfindungsgemäßen Wärmespeichersystems von einem oder mehreren Festkörpern gebildet, die aus Metall oder einer Metalllegierung bestehen oder hergestellt sind, um eine besonders hohe Wärmeleitfähigkeit der Festkörper und in der Folge auch einen besonders hohen Wärmestrom zwischen der ersten Festkörperanordnung und der zweiten Festkörperanordnung bei einem Festkörperkontakt zu erzielen. Hier sind insbesondere Buntmetalle, wie beispielsweise Kupfer oder Kupferlegierungen bevorzugt.

Da sich ein über den vorangehend beschriebenen veränderbaren Festkörperkontakt hinaus bestehender Festkörperkontakt zwischen der ersten Festkörperanordnung und der zweiten Festkörperanordnung im Sinne eines kompakten Aufbaus des Wärmespeichersystems kaum vermeiden lassen dürfte, besteht in einer weiteren vorteilhaften Ausführungsform des erfindungsgemäßen Wärmespeichersystems zusätzlich zu dem veränderbaren Festkörperkontakt ein dauerhafter Festkörperkontakt zwischen der ersten und zweiten Festkörperanordnung über mindestens ein weiteres Bauteil des Wärmespeichersystems, wobei das mindestens eine weitere Bauteil des Wärmespeichersystems vorzugsweise als Isolator ausgebildet ist oder/und eine geringere Wärmeleitfähigkeit als der mindestens eine Festkörper der ersten und zweiten Festkörperanordnung aufweist. Zu diesem Zweck ist das mindestens eine weitere Bauteil vorzugsweise nicht aus Metall gefertigt.

Das erfindungsgemäße Verfahren dient der Wärmespeicherung und -entnahme unter Erzielung der vorangehend unter Bezugnahme auf das Wärmespeichersystem genannten Vorteile. Hierbei ist es bevorzugt, wenn das Verfahren dem Betrieb eines Wärmespeichersystems der erfindungsgemäßen Art dient. Das Verfahren weist die Verfahrensschritte Bereitstellung eines mit einer ersten Festkörperanordnung in Kontakt stehenden Wärmespeichermediums und einer zweiten Festkörperanordnung, Erwärmen des Wärmespeichermediums durch eine Heizeinrichtung, Veränderung eines Festkörperkontakts zwischen der ersten Festkörperanordnung und der zweiten Festkörperanordnung unter Erhöhung oder Verringerung eines Wärmestroms von der ersten Festkörperanordnung zu der zweiten Festkörperanordnung, wobei der Festkörperkontakt zwischen der ersten Festkörperanordnung und der zweiten Festkörperanordnung aufgehoben und mittelbar unter Zwischenschaltung eines oder mehrerer Festkörper erzeugt wird, und Entnahme von Wärme an der zweiten Festkörperanordnung.

In einer bevorzugten Ausführungsform des erfindungsgemäßen Verfahrens wird der Festkörperkontakt zwischen der ersten Festkörperanordnung und der zweiten Festkörperanordnung schrittweise oder kontinuierlich verändert.

In einer besonders vorteilhaften Ausführungsform des erfindungsgemäßen Verfahrens wird der Festkörperkontakt zwischen der ersten Festkörperanordnung und der zweiten Festkörperanordnung durch Veränderung einer Anzahl von Festkörpern, die sowohl mit der ersten als auch mit der zweiten Festkörperanordnung in Kontakt stehen, verändert.

Gemäß einer weiteren bevorzugten Ausführungsform des erfindungsgemäßen Verfahrens wird der Festkörperkontakt zwischen der ersten Festkörperanordnung und der zweiten Festkörperanordnung durch Veränderung der Größe einer Kontaktfläche zwischen der ersten Festkörperanordnung und der zweiten Festkörperanordnung verändert.

In einer besonders vorteilhaften Ausführungsform des erfindungsgemäßen Verfahrens erfolgt die Entnahme von Wärme an der zweiten Festkörperanordnung durch Erwärmung eines die zweite Festkörperanordnung kontaktierenden Fluids.

In einer besonders bevorzugten Ausführungsform des erfindungsgemäßen Verfahrens wird der Festkörperkontakt mit Hilfe einer Antriebseinrichtung, vorzugsweise einer elektrischen oder/und hydraulischen Antriebseinrichtung, verändert.

Bezüglich der Vorteile der Ausführungsvarianten des erfindungsgemäßen Verfahrens sowie weiterer Ausführungsformen derselben sei auf die vorangehende Beschreibung des erfindungsgemäßen Wärmespeichersystems verwiesen, aus der sich für den Fachmann ohne Weiteres die entsprechenden Vorteile und Ausführungsvarianten des erfindungsgemäßen Verfahrens ergeben, ohne dass die entsprechenden Merkmale hier wiederholt werden müssten.

Die Erfindung wird im Folgenden anhand einer beispielhaften Ausführungsform unter Bezugnahme auf die beigefügten Zeichnungen näher erläutert. Es zeigen:
- Fig. 1: eine perspektivische Darstellung einer Ausführungsform des erfindungsgemäßen Wärmespeichersystems in geschnittener Darstellung,
- Fig. 2: eine teilweise Explosionsdarstellung des Wärmespeichersystems aus Fig. 1,
- Fig. 3: eine Draufsicht auf den Speicherraum des Wärmespeichersystems aus den Fig. 1 und 2 in geschnittener Darstellung,
- Fig. 4: eine teilweise, vergrößerte Darstellung einer Strebe oder Heizstrebe aus den Fig. 1 bis 3 in perspektivischer Darstellung,
- Fig. 5: eine Seitenansicht des Wärmespeichersystems aus den Fig. 1 bis 3 in geschnittener Darstellung mit den beweglichen Festkörpern in einer ersten Stellung und
- Fig. 6: die Querschnittsansicht aus Fig. 5 mit den beweglichen Festkörpern in einer zweiten Stellung.

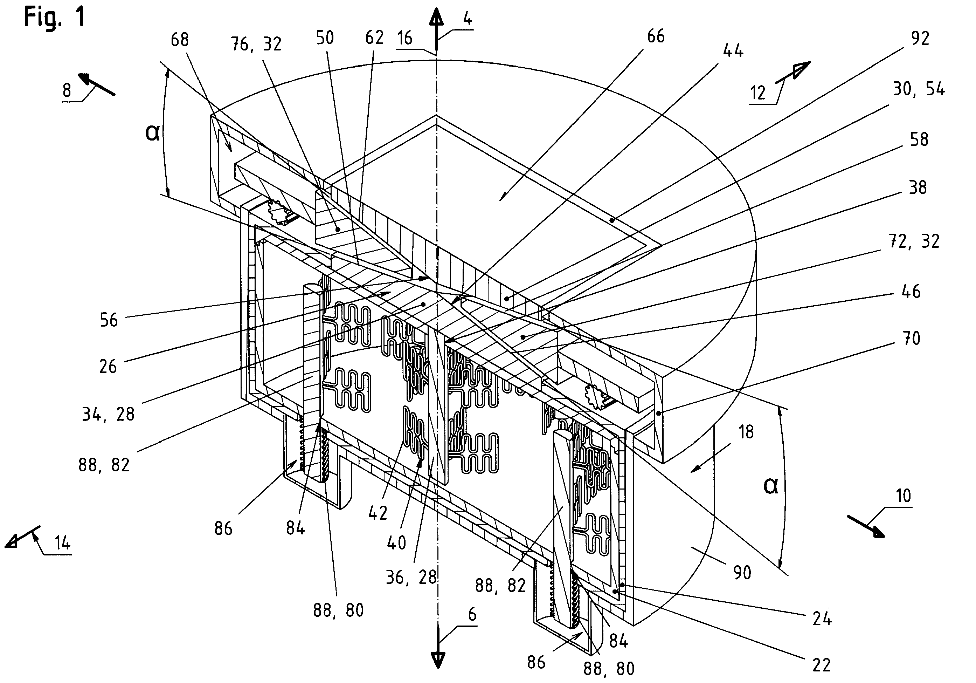

Die Fig. 1 bis 6 zeigen eine Ausführungsform des erfindungsgemäßen Wärmespeichersystems 2 zur Durchführung des erfindungsgemäßen Verfahrens zur Wärmespeicherung und -entnahme. In den Figuren sind die einander entgegengesetzten Höhenrichtungen 4, 6, die einander entgegengesetzten Breitenrichtungen 8, 10 und die einander entgegengesetzten Längenrichtungen 12, 14 des Wärmespeichersystems 2 anhand entsprechender Pfeile angedeutet, wobei das Wärmespeichersystem 2 eine zentrale Höhenachse 16 aufweist, die sich in den Höhenrichtungen 4, 6 erstreckt.

Das Wärmespeichersystem 2 weist ein Gehäuse 18 auf, das aus mehreren Gehäuseteilen oder -abschnitten zusammengesetzt ist. Innerhalb des Gehäuses 18 ist ein Speicherraum 20 ausgebildet. Der Speicherraum 20 ist im Wesentlichen zylindrisch ausgebildet, wobei sich dessen Längsachse in Höhenrichtung 4, 6 erstreckt und vorzugsweise mit der Höhenachse 16 des Gehäuses 18 übereinstimmt. Der Speicherraum 20 ist durch das Gehäuse 18 abgeschlossen. So ist der Speicherraum 20 in keinerlei Kreislauf eingebunden und auch Zu- oder/und Abflüsse sind vorzugsweise nicht vorgesehen. Der Speicherraum 20 dient der Aufnahme eines Wärmespeichermediums, wobei auf die Darstellung des Wärmespeichermediums innerhalb des Speicherraums 20 aus Gründen der Übersichtlichkeit in den Figuren verzichtet wurde. Dabei ist der Speicherraum 20 - wenngleich nicht gezeigt - vorzugsweise zu mindestens 95% oder vollständig mit dem Wärmespeichermedium gefüllt. Begrenzt ist der Speicherraum 20 durch ein inneres Gehäuseteil 22 und ein das innere Gehäuseteil umgebendes äußeres Gehäuseteil 24 des Gehäuses 18, wobei inneres oder/und äußeres Gehäuseteil 22 bzw. 24 wiederum ein-, zwei- oder mehrteilig ausgebildet sein können und sinngemäß ein Speicherraumgehäuse 22, 24 bilden.

In Höhenrichtung 4 oberhalb des Speicherraums 20 und außerhalb des zumindest inneren Gehäuseteils 22 ist eine Entnahmeeinrichtung 26 zur Entnahme von Wärme aus dem Wärmespeichermedium angeordnet. Die Entnahmeeinrichtung 26 weist eine erste Festkörperanordnung 28, eine zweite Festkörperanordnung 30 und eine dritte Festkörperanordnung 32 auf, die nachstehend näher beschrieben werden sollen.

Die erste Festkörperanordnung 28 steht mit dem Wärmespeichermedium innerhalb des Speicherraums 20 in Kontakt. Die erste Festkörperanordnung 28 weist einen ausgangsseitigen Festkörper 34 zur Erzielung des später näher beschriebenen Festkörperkontakts mit der zweiten Festkörperanordnung 30 auf. Der ausgangsseitige Festkörper 34 erstreckt sich im Wesentlichen in den Breiten- und Längenrichtungen 8 bis 14 und ist mit seiner in Höhenrichtung 6 nach unten weisenden Seite an der in Höhenrichtung 4 nach oben weisenden Seite des inneren Gehäuseteils 22, gegebenenfalls des äußeren Gehäuseteils 24, angeordnet. Darüber hinaus weist die erste Festkörperanordnung 28 weitere Festkörper auf, nämlich mehrere in Höhenrichtung 6 nach unten in den Speicherraum 20 hervorstehende Streben 36 zur Kontaktierung des Speichermediums innerhalb des Speicherraums 20. Mit ihrem in Höhenrichtung 4 nach oben weisenden Ende sind die Streben 36 unmittelbar mit dem ausgangsseitigen Festkörper 34 der ersten Festkörperanordnung 28 verbunden, während das in Höhenrichtung 6 nach unten weisende Ende der Streben 36 von dem inneren Gehäuseteil 22 beabstandet ist. Um von dem ausgangsseitigen Festkörper 34 in den Speicherraum 20 zu gelangen, erstrecken sich die Streben 36 durch entsprechende Öffnungen 38 in dem inneren Gehäuseteil 22.

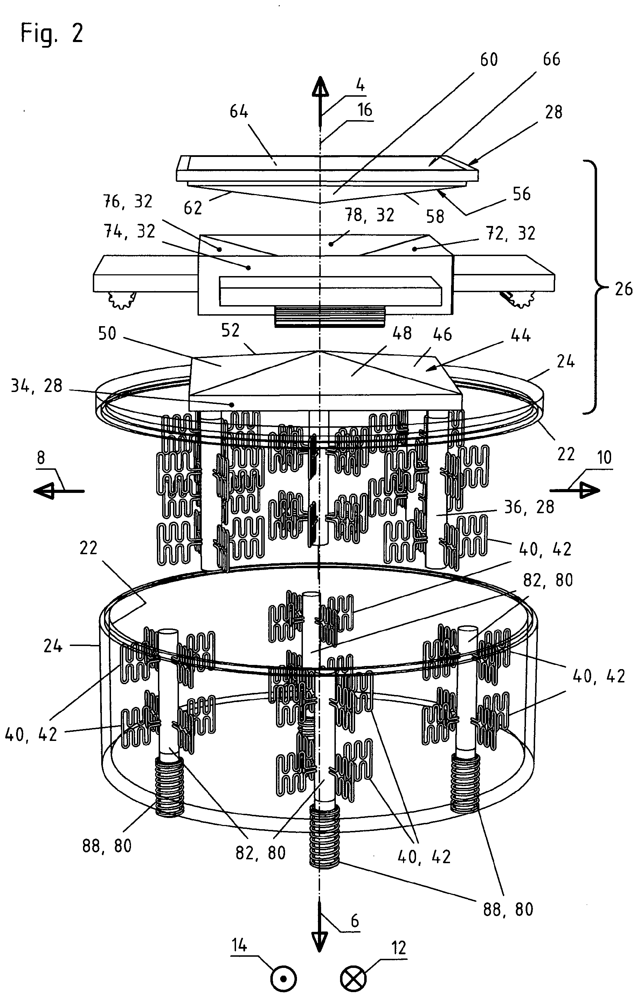

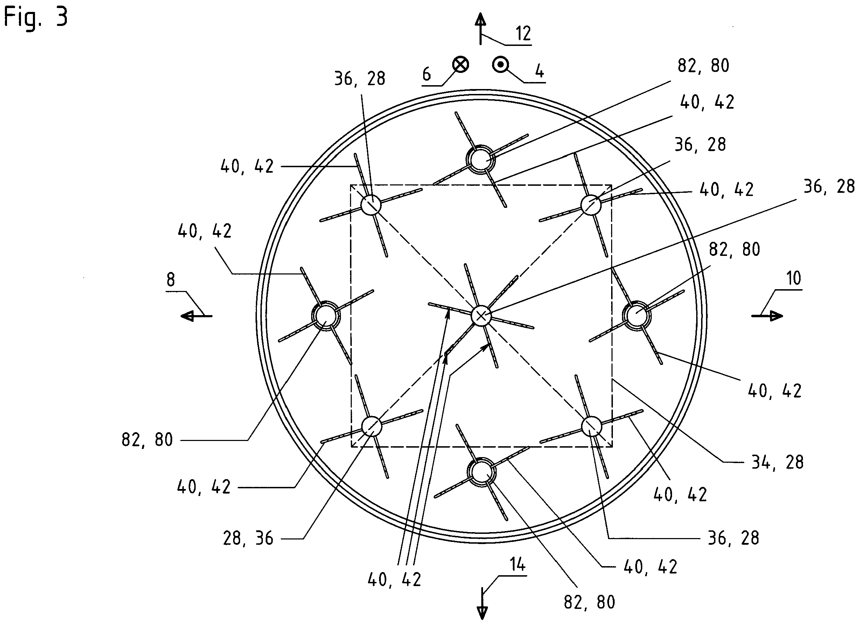

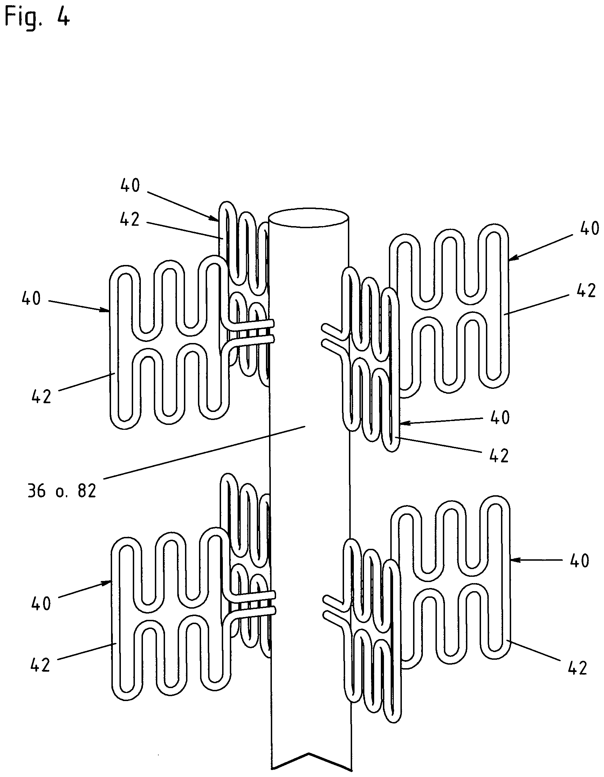

Wie aus Fig. 3 ersichtlich, sind insgesamt fünf Streben 36 vorgesehen, von denen sich eine mittlere Strebe 36 entlang der Höhenachse 16 erstreckt, während die verbleibenden vier Streben 36 symmetrisch um die Höhenachse 16 angeordnet sind. Um einen möglichst großflächigen Kontakt zwischen der ersten Festkörperanordnung 28 und dem Wärmespeichermedium innerhalb des Speicherraums 20 zu gewährleisten, sind an den Streben 36 hervorstehende Rippen oder Flügel 40 angeordnet, die vorzugsweise von einem mehrfach, gegebenenfalls in einer Ebene, gebogenen langgestreckten Element 42 gebildet sind. In den Fig. 1 und 2 sind jedoch nur einige der tatsächlich vorgesehenen Rippen/Flügel 40 gezeigt, um die Anschaulichkeit zu erhöhen, während die tatsächliche Anzahl im Wesentlichen aus den Fig. 3 und 4 ersichtlich ist.

Der ausgangsseitige Festkörper 34 weist auf seiner den Streben 36 abgewandten und im Wesentlichen in Höhenrichtung 4 weisenden Seite eine Oberfläche 44 auf, die der später näher beschriebenen Erzeugung des Festkörperkontakts zwischen der ersten und zweiten Festkörperanordnung 28, 30 dient. Wie insbesondere aus Fig. 2 ersichtlich, ist die Oberfläche 44 des ausgangsseitigen Festkörpers 34 in der Art einer Mantelfläche einer Pyramide, gegebenenfalls eines Pyramidenstumpfes, geformt, wobei sich die Höhenachse der Pyramide im Wesentlichen in den Höhenrichtungen 4, 6, hier entlang der Höhenachse 16, erstreckt. In der dargestellten Ausführungsform weist die Pyramide insgesamt vier Seitenflächen auf, so dass die Oberfläche 44 sinngemäß in vier erste Oberflächenabschnitte 46 bis 52 unterteilt ist.

Die zweite Festkörperanordnung 30 ist im Wesentlichen von einem Festkörper 54 gebildet, der in Höhenrichtung 4 oberhalb des ausgangsseitigen Festkörpers 34 der ersten Festkörperanordnung 28 und von diesem beabstandet angeordnet ist und sich im Wesentlichen in den Breiten- und Längenrichtungen 8 bis 14 erstreckt, um in Höhenrichtung 4, 6 mit dem ausgangsseitigen Festkörper 34 der ersten Festkörperanordnung 28 fluchtend angeordnet zu sein. Auf seiner dem ausgangsseitigen Festkörper 34 in Höhenrichtung 6 zugewandten Seite weist der ausgangsseitige Festkörper 54 wiederum eine Oberfläche 56 auf, über die der später näher beschriebene Festkörperkontakt zu der ersten Festkörperanordnung 28 erzeugt werden soll. Man kann daher auch von einem eingangsseitigen Festkörper 54 sprechen. Auch die Oberfläche 56 der zweiten Festkörperanordnung 30 ist in der Art der Mantelfläche einer Pyramide, gegebenenfalls eines Pyramidenstumpfes, geformt, wobei die Pyramide oder der Pyramidenstumpf auch in diesem Fall vier Seiten aufweist, so dass die Oberfläche 56 sinngemäß in vier zweite Oberflächenabschnitte 58 bis 64 unterteilt ist.

Der Festkörper 34 der ersten Festkörperanordnung 28 und der ausgangsseitige Festkörper 54 der zweiten Festkörperanordnung 30 sind derart feststehend und unbeweglich zueinander angeordnet, dass der erste Oberflächenabschnitt 46 und der zweite Oberflächenabschnitt 58, der erste Oberflächenabschnitt 48 und der zweite Oberflächenabschnitt 60, der erste Oberflächenabschnitt 50 und der zweite Oberflächenabschnitt 62 und der erste Oberflächenabschnitt 52 und der zweite Oberflächenabschnitt 64 in Höhenrichtung 4, 6 einander gegenüberliegend und somit einander zugeordnet und überdies zueinander schräggestellt sind, wobei die einander zugeordneten ersten und zweiten Oberflächenabschnitte jeweils vorzugsweise einen Winkel α von weniger als 60° oder weniger als 10° einschließen.

Auf seiner der ersten Festkörperanordnung 28 abgewandten Seite weist der Festkörper 54 der zweiten Festkörperanordnung 30 eine Seite auf, die eine Innenseite 66 eines nicht näher dargestellten Fluidbehälters oder einer nicht näher dargestellten Fluidleitung zum Erwärmen eines Fluids ausbildet, so dass an der Innenseite 66 die über die Entnahmeeinrichtung 26 aus dem Wärmespeichermedium innerhalb des Speicherraums 20 entnommene Wärme an das Fluid eines Verbrauchers abgegeben werden kann. Mithin kann der Festkörper 54 auch als ausgangsseitiger Festkörper 54 bezeichnet werden. Bei der Innenseite 66 handelt es sich vorzugsweise um die Innenseite 66 des Kessels eines Verdampfers, um das Fluid zu verdampfen oder zu erhitzen und gegebenenfalls einer Turbine zuzuführen, die durch den Dampf angetrieben wird.

Die Festkörper 34, 54 der ersten und zweiten Festkörperanordnung 28, 30, insbesondere deren Oberflächen 44, 56 sind in einem oberhalb des Speicherraums 20 und innerhalb des Gehäuses 18 ausgebildeten Kontaktraum 68 angeordnet. Der Kontaktraum 68 ist in Höhenrichtung 4 und in den Breiten- und Längenrichtungen 8 bis 14 durch ein oberes Gehäuseteil 70 des Gehäuses 18 und in Höhenrichtung 6 im Wesentlichen durch das äußere Gehäuseteil 24, gegebenenfalls auch das innere Gehäuseteil 22, begrenzt, wobei der Kontaktraum 68 abgeschlossen ist, so dass dieser nicht in einen Luft- oder Fluidkreislauf o. ä. eingebunden ist. Überdies ist der Kontaktraum 68 evakuiert, um einen Wärmeverlust am ausgangsseitigen Festkörper 34 der ersten Festkörperanordnung 28 durch Konvektion an der Oberfläche 44 zu vermeiden.

Um einen Wärmestrom von der ersten Festkörperanordnung 28, also ausgehend von dem Wärmespeichermedium innerhalb des Speicherraums 20 über die Streben 36 und den ausgangsseitigen Festkörper 34, zu der zweiten Festkörperanordnung 30, also zu dem Festkörper 54 und letztlich zu der Innenseite 66, einstellen bzw. ändern zu können, ist ein Festkörperkontakt zwischen der ersten Festkörperanordnung 28 und der zweiten Festkörperanordnung 30 unter Erhöhung oder Verringerung des genannten Wärmestroms von der ersten Festkörperanordnung 28 zu der zweiten Festkörperanordnung 30 veränderbar. In der konkreten Ausführungsform nach den Fig. 1 bis 6 ist der Festkörperkontakt zwischen der ersten Festkörperanordnung 28 und der zweiten Festkörperanordnung 30 schrittweise bzw. stufenweise veränderbar, nämlich durch Veränderung einer Anzahl von Festkörpern, die sowohl mit der ersten als auch mit der zweiten Festkörperanordnung 28, 30 in Kontakt stehen, wie dies nachstehend näher erläutert werden soll. Auch ist der Festkörperkontakt zwischen der ersten Festkörperanordnung 28 und der zweiten Festkörperanordnung 30 durch die Entnahmeeinrichtung 26 aufhebbar und erzeugbar, wobei der Festkörperkontakt über die nachstehend beschriebene dritte Festkörperanordnung 32 mittelbar erzeugbar oder erzeugt ist.

Wie bereits vorangehend angedeutet, ist bei der dargestellten Ausführungsform des Wärmespeichersystems 2 eine dritte Festkörperanordnung 32 vorgesehen, die der schrittweisen bzw. stufenweisen Veränderung eines Festkörperkontakts zwischen der ersten Festkörperanordnung 28 und der zweiten Festkörperanordnung 30 unter Erhöhung oder Verringerung eines Wärmestroms von der ersten Festkörperanordnung 28 zu der zweiten Festkörperanordnung 30 dient. Die dritte Festkörperanordnung 32 weist mehrere bewegliche Festkörper auf, wobei in der dargestellten Ausführungsform vier bewegliche Festkörper 72 bis 78 vorgesehen sind. Die dritte Festkörperanordnung 32 oder zumindest deren bewegliche Festkörper 72 bis 78 sind dabei innerhalb des zuvor beschriebenen Kontaktraumes 68 angeordnet. Während die erste Festkörperanordnung 28 und die zweite Festkörperanordnung 30, insbesondere deren Festkörper 34 und 54 relativ zueinander unbeweglich an dem Gehäuse 18 angeordnet und deren Oberflächen 44 und 56 dauerhaft voneinander beabstandet sind, sind die beweglichen Festkörper 72 bis 78 relativ zu der ersten und zweiten Festkörperanordnung 28, 30, insbesondere relativ zu den beiden Festkörpern 34 und 54 bewegbar. Genauer gesagt sind die beweglichen Festkörper 72 bis 78 quer zu der Höhenachse 16 relativ zu den Festkörpern 34, 54 bewegbar und dabei translatorisch bewegbar oder verschiebbar, wobei den beweglichen Festkörpern 72 bis 78 zu diesem Zweck eine nicht näher dargestellte Antriebseinrichtung zum Bewegen derselben zugeordnet ist. Die Antriebseinrichtung weist vorzugsweise einen elektromotorischen oder hydraulischen Antrieb auf. Auch sind die beweglichen Festkörper 72 bis 78 jeweils keilförmig oder keilartig ausgebildet, so dass diese eine in Höhenrichtung 6 nach unten weisende Fläche und eine in Höhenrichtung 4 nach oben weisende Fläche aufweisen, die dank der Keilform zueinander schräggestellt sind, wobei der Schrägstellungswinkel vorzugsweise dem zuvor beschriebenen Winkel α zwischen den einander zugeordneten ersten und zweiten Oberflächenabschnitten 46 bis 52 bzw. 58 bis 64 entspricht.

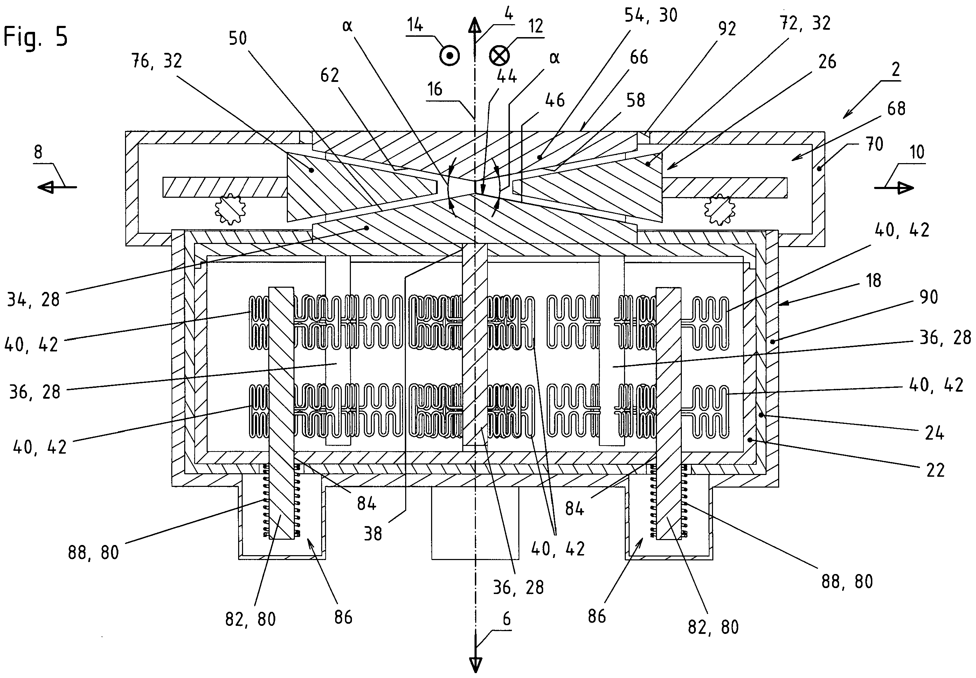

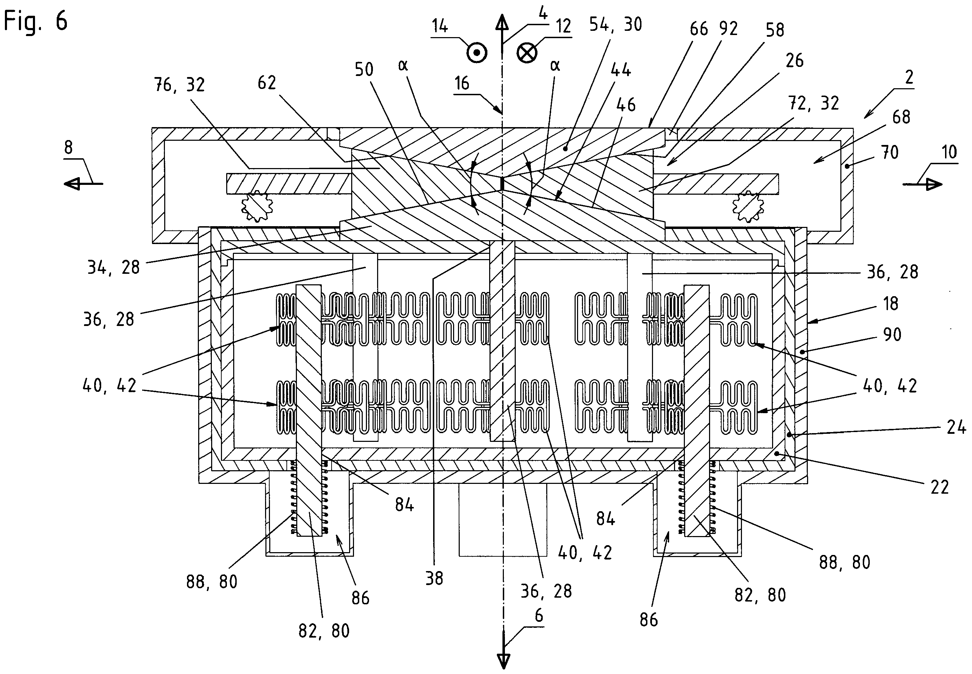

So kann der bewegliche Festkörper 72 ausgehend von seiner in den Fig. 1 und 5 gezeigten ersten Stellung, in der der bewegliche Festkörper 72 mit keinem der Oberflächenabschnitte 46 und 58 der Oberflächen 44 und 56 oder mit lediglich einem der Oberflächenabschnitte 46 oder 58 in Kontakt steht, in Breitenrichtung 8 in die in Fig. 6 gezeigte zweite Stellung verschoben werden, in der der bewegliche Festkörper 72 mit beiden Oberflächenabschnitten 46 und 58 der Oberflächen 44 und 56 der ersten und zweiten Festkörperanordnung 28, 30 flächig in Kontakt steht, so dass der mittelbare Festkörperkontakt zwischen der ersten Festkörperanordnung 28 und der zweiten Festkörperanordnung 30 über den beweglichen Festkörper 72 in einem Schritt oder einer Stufe unter Erhöhung des Wärmestroms von der ersten Festkörperanordnung 28 zu der zweiten Festkörperanordnung 30 verändert wurde. Die weiteren beweglichen Festkörper 74, 76 und 78 können unabhängig von dem beweglichen Festkörper 72 und unabhängig voneinander in die erste oder/und zweite Stellung bewegt werden, wobei der bewegliche Festkörper 74 in Längenrichtung 12 von der ersten Stellung in die zweite Stellung, der bewegliche Festkörper 76 in Breitenrichtung 10 von der ersten Stellung in die zweite Stellung und der bewegliche Festkörper 78 in Längenrichtung 14 von der ersten Stellung in die zweite Stellung bewegbar bzw. translatorisch bewegbar oder verschiebbar ist. Je mehr der beweglichen Festkörper 72 bis 78 in der zweiten Stellung angeordnet sind, umso größer ist der mögliche Wärmestrom zwischen der ersten Festkörperanordnung 28 und der zweiten Festkörperanordnung 30, wobei die Veränderung des mittelbaren Festkörperkontakts und mithin auch die Veränderung des Wärmestroms schritt- oder stufenweise in Abhängigkeit von der Anzahl der in der zweiten Stellung angeordneten beweglichen Festkörper 72 bis 78 erfolgen kann.

Grundsätzlich kann das Wärmespeichersystem 2 auch derart ausgeführt sein, dass der Festkörperkontakt zwischen der ersten Festkörperanordnung 28 und der zweiten Festkörperanordnung 30 kontinuierlich verändert werden kann.

Um die zu speichernde Wärme in das Wärmespeichersystem 2 einbringen zu können, weist das Wärmespeichersystem 2 ferner eine Heizeinrichtung 80 zum Erwärmen des Wärmespeichermediums innerhalb des Speicherraums 20 auf, wobei es sich bei der Heizeinrichtung 80 um eine induktive Heizeinrichtung 80 handelt. So weist die Heizeinrichtung 80 insbesondere mehrere sich in den Speicherraum 20 erstreckende induktiv erwärmbare Heizstreben 82 auf, die sich im Wesentlichen in den Höhenrichtungen 4, 6 erstrecken. Konkret erstrecken sich die Heizstreben 82 einerseits durch eine Öffnung 84 am Boden der Gehäuseteile 22, 24 in Höhenrichtung 4 in den Speicherraum 20, ohne dass deren in Höhenrichtung 4 nach oben weisende Enden jedoch an das innere Gehäuseteil 22 angrenzen, vielmehr sind die Enden der Heizstreben 82 in Höhenrichtung 4, 6 von dem inneren Gehäuseteil 22 beabstandet, so dass auch von freien Enden gesprochen werden kann. In der entgegengesetzten Höhenrichtung 6 erstrecken sich die Heizstreben 82 durch die genannte Öffnung 84 in einen Induktionsraum 86, bei dem es sich um einen abgeschlossenen oder/und evakuierten Raum handelt, in dem nicht nur die Heizstrebe 82, sondern auch der der Heizstrebe 82 zugeordnete Induktor 88, also beispielsweise eine elektrische Spule, angeordnet ist, um die Heizstrebe 82 durch einen hochfrequenten Wechselstrom erwärmen zu können.

Um bei der Heizeinrichtung 80 eine möglichst große Kontaktfläche zwischen der Heizeinrichtung 80 und dem Wärmespeichermedium innerhalb des Speicherraums 20 zu erzielen, sind auch an den Heizstreben 82 die zuvor unter Bezugnahme auf die Streben 36 der ersten Festkörperanordnung 28 beschriebenen Rippen oder Flügel 40 vorgesehen, die an den Heizstreben 82 angeordnet und von einem mehrfach gebogenen langgestreckten Element 42 gebildet sind, so dass insofern die Darstellung in Fig. 4 gleichermaßen für die Streben 36 und die Heizstreben 82 gilt.

Die geschlossenen oder/und evakuierten Induktionsräume 86 sind im Wesentlichen durch ein unteres Gehäuseteil 90 des Gehäuses 18 und in Höhenrichtung 4 durch das innere oder/und äußere Gehäuseteil 22, 24 begrenzt. Zusammen mit dem oberen Gehäuseteil 70 bildet das untere Gehäuseteil 90, in dem das innere Gehäuseteil 22 und das äußere Gehäuseteil 24 aufgenommen sind, die äußere Hülle des Wärmespeichersystems 2.

Wie bereits vorangehend dargelegt, werden die erste Festkörperanordnung 28, die zweite Festkörperanordnung 30 und die dritte Festkörperanordnung 32 von einem oder mehreren Festkörpern gebildet, wobei die genannten Festkörper vorzugsweise aus einem Metall oder einer Metalllegierung gefertigt sind, um aufseiten der genannten Festkörperanordnungen 28, 30, 32 eine große Wärmeleitfähigkeit sicherzustellen. So sind bei der dargestellten Ausführungsform insbesondere der ausgangsseitige Festkörper 34, die Streben 36 und die Rippen bzw. Flügel 40 der ersten Festkörperanordnung 28, der Festkörper 54 der zweiten Festkörperanordnung 30 und die beweglichen Festkörper 72, 74, 76, 78 der dritten Festkörperanordnung 32 aus einem Metall oder einer Metalllegierung gefertigt, wobei dies in entsprechender Weise auch für die Heizstreben 82 und die daran angeordneten Rippen bzw. Flügel 40 gelten sollte. Insbesondere für die Streben 36 oder/und die Heizstreben 82 bietet sich eine Fertigung aus einem Stahl an, so dass einerseits eine gute Wärmeleitfähigkeit gegeben und andererseits eine chemische Beständigkeit gegenüber dem Wärmespeichermedium innerhalb des Speicherraums 20 gegeben ist. Für die beweglichen Festkörper 72, 74, 76, 78 kommt als Material beispielsweise ein Buntmetall, vorzugsweise Kupfer oder eine Kupferlegierung in Frage, wohingegen die Festkörper 34 oder/und 54 aus Stahl oder ebenfalls aus einem Buntmetall wie Kupfer oder Kupferlegierung gefertigt sein könnten.

Während die metallisch ausgebildeten Festkörper der Festkörperanordnungen 28, 30, 32 eine besonders hohe Wärmeleitfähigkeit aufweisen, weist zumindest das äußere Gehäuseteil 24, in dem das innere Gehäuseteil 22 mit dem Speicherraum 20 aufgenommen ist, ein Material auf, das eine deutlich geringere Wärmeleitfähigkeit als das Material der genannten Festkörperanordnungen 28, 30, 32 aufweist. Entsprechendes kann grundsätzlich auch für das dem Speicherraum 20 unmittelbar zugewandte innere Gehäuseteil 22 gelten, das innere Gehäuseteil 22 kann jedoch auch in erster Linie dahingehend ausgelegt sein, dass eine gewisse Beständigkeit des Gehäuses gegenüber dem Wärmespeichermedium innerhalb des Speicherraums 20 erzielt wird, so dass das innere Gehäuseteil 22 grundsätzlich auch aus Stahl gefertigt sein kann.

Aus der Darstellung in den Fig. 1, 5 und 6 ist ersichtlich, dass zusätzlich zu dem vorangehend beschriebenen veränderbaren Festkörperkontakt zwischen der ersten Festkörperanordnung 28 und der zweiten Festkörperanordnung 30 über die dritte Festkörperanordnung 32 ferner ein dauerhafter Festkörperkontakt zwischen der ersten und zweiten Festkörperanordnung 28, 30 über mindestens ein weiteres Bauteil des Wärmespeichersystems 2, hier über das Gehäuse 18, besteht. Konkret steht der ausgangsseitige Festkörper 34 der ersten Festkörperanordnung 28 über das äußere Gehäuseteil 24, das untere Gehäuseteil 90 und das obere Gehäuseteil 70 mittelbar mit dem ausgangsseitigen Festkörper 54 der zweiten Festkörperanordnung 30 in Festkörperkontakt, bei dem es sich um einen dauerhaften Festkörperkontakt handelt. Da das äußere Gehäuseteil 24, gegebenenfalls auch das untere Gehäuseteil 90 oder/und das obere Gehäuseteil 70 eine geringere Wärmeleitfähigkeit als die beiden Festkörper 34, 54 der ersten und zweiten Festkörperanordnung 28, 30 aufweisen oder gar als Isolatoren ausgebildet sind, fällt dieser dauerhafte Festkörperkontakt mit Blick auf einen etwaigen Wärmeverlust nicht stärker ins Gewicht. Ergänzend ist der Festkörper 54 der zweiten Festkörperanordnung 30 über ein isolierendes Bauteil, das gegenüber dem oberen Gehäuseteil 70 nochmals eine reduzierte Wärmeleitfähigkeit aufweist, an dem oberen Gehäuseteil 70 abgestützt oder angeordnet.

Abschließend ist zu erwähnen, dass das Wärmespeichersystem 2 vorzugsweise als Latentwärmespeichersystem mit einem sogenannten Phasenwechselmaterial als Wärmespeichermedium ausgebildet ist. Bei dem Wärmespeichermedium handelt es sich vorzugsweise um ein Salz oder ein Salzgemisch, wobei die Wärmeabgabe an die erste Festkörperanordnung 28 vorzugsweise beim Übergang eines flüssigen Zustands in einen festen Zustand des Salzes oder Salzgemisches erfolgt, weshalb hier auch von einem Flüssigsalzspeichersystem gesprochen werden kann.

### Bezugszeichenliste

- 2: Wärmespeichersystem
- 4: Höhenrichtung
- 6: Höhenrichtung
- 8: Breitenrichtung
- 10: Breitenrichtung
- 12: Längenrichtung
- 14: Längenrichtung
- 16: Höhenachse
- 18: Gehäuse
- 20: Speicherraum
- 22: inneres Gehäuseteil
- 24: äußeres Gehäuseteil
- 26: Entnahmeeinrichtung
- 28: erste Festkörperanordnung
- 30: zweite Festkörperanordnung
- 32: dritte Festkörperanordnung
- 34: Festkörper
- 36: Streben
- 38: Öffnungen
- 40: Rippen/Flügel
- 42: Element
- 44: Oberfläche
- 46: erster Oberflächenabschnitt
- 48: erster Oberflächenabschnitt
- 50: erster Oberflächenabschnitt
- 52: erster Oberflächenabschnitt
- 54: Festkörper
- 56: Oberfläche
- 58: zweiter Oberflächenabschnitt
- 60: zweiter Oberflächenabschnitt
- 62: zweiter Oberflächenabschnitt
- 64: zweiter Oberflächenabschnitt
- 66: Innenseite
- 68: Kontaktraum
- 70: oberes Gehäuseteil
- 72: beweglicher Festkörper
- 74: beweglicher Festkörper
- 76: beweglicher Festkörper
- 78: beweglicher Festkörper
- 80: Heizeinrichtung
- 82: Heizstreben
- 84: Öffnung
- 86: Induktionsraum
- 88: Induktor
- 90: unteres Gehäuseteil
- 92: Bauteil

- α: Winkel

## Patentansprüche

1. Wärmespeichersystem (2) aufweisend einen Speicherraum (20), ein Wärmespeichermedium in dem Speicherraum (20), eine Heizeinrichtung (80) zum Erwärmen des Wärmespeichermediums und eine Entnahmeeinrichtung (26) zur Entnahme von Wärme aus dem Wärmespeichermedium, wobei die Entnahmeeinrichtung (26) eine erste Festkörperanordnung (28), die mit dem Wärmespeichermedium in Kontakt steht, und eine zweite Festkörperanordnung (30) aufweist, wobei ein Festkörperkontakt zwischen der ersten Festkörperanordnung (28) und der zweiten Festkörperanordnung (30) unter Erhöhung oder Verringerung eines Wärmestroms von der ersten Festkörperanordnung (28) zu der zweiten Festkörperanordnung (30) veränderbar ist, **dadurch gekennzeichnet, dass** der Festkörperkontakt zwischen der ersten Festkörperanordnung (28) und der zweiten Festkörperanordnung (30) aufhebbar und mittelbar unter Zwischenschaltung eines oder mehrerer Festkörper (72, 74, 76, 78) erzeugbar oder erzeugt ist.

2. Wärmespeichersystem (2) nach Anspruch 1, **dadurch gekennzeichnet, dass** der Festkörperkontakt zwischen der ersten Festkörperanordnung (28) und der zweiten Festkörperanordnung (30) schrittweise oder kontinuierlich veränderbar oder/und durch Veränderung einer Anzahl der Festkörper (72, 74, 76, 78), die sowohl mit der ersten als auch mit der zweiten Festkörperanordnung (28, 30) in Kontakt stehen, veränderbar ist.

3. Wärmespeichersystem (2) nach einem der Ansprüche 1 oder 2, **dadurch gekennzeichnet, dass** die erste Festkörperanordnung (28) und die zweite Festkörperanordnung (30) jeweils mindestens eine Oberfläche (44, 56) aufweisen, über die der Festkörperkontakt mittelbar erzeugbar oder erzeugt ist, wobei die Oberflächen (44, 56) vorzugsweise in einem abgeschlossenen oder/und evakuierten Kontaktraum (68) angeordnet sind.

4. Wärmespeichersystem (2) nach Anspruch 3, **dadurch gekennzeichnet, dass** eine dritte Festkörperanordnung (32) mit mindestens einem beweglichen Festkörper (72; 74; 76; 78) vorgesehen ist, der relativ zu der ersten und zweiten Festkörperanordnung (28, 30) von einer ersten Stellung, in der der bewegliche Festkörper (72; 74; 76; 78) mit keiner der Oberflächen (44, 56) oder mit der Oberfläche (44; 56) lediglich einer der ersten und zweiten Festkörperanordnung (28; 30) in Kontakt steht, in eine zweite Stellung bewegbar oder translatorisch verschiebbar ist, in der der bewegliche Festkörper (72; 74; 76; 78) mit den Oberflächen (44, 56) der ersten und zweiten Festkörperanordnung (28, 30) in Kontakt steht, wobei die dritte Festkörperanordnung (32) vorzugsweise mindestens zwei bewegliche Festkörper (72, 74, 76, 78) aufweist, die unabhängig voneinander in die erste oder/und zweite Stellung bewegbar sind, oder/und der mindestens eine bewegliche Festkörper (72; 74; 76; 78) vorzugsweise in dem abgeschlossenen oder/und evakuierten Kontaktraum (68) angeordnet ist und die erste und zweite Festkörperanordnung (28, 30) besonders bevorzugt relativ zueinander unbeweglich angeordnet oder/und deren Oberflächen (44, 56) dauerhaft voneinander beabstandet sind.

5. Wärmespeichersystem (2) nach Anspruch 4, **dadurch gekennzeichnet, dass** die Oberfläche (44) der ersten Festkörperanordnung (28) mindestens einen ersten Oberflächenabschnitt (46) und die Oberfläche (56) der zweiten Festkörperanordnung (30) mindestens einen zweiten Oberflächenabschnitt (58) aufweist, die einander zugeordnet und zueinander schräggestellt sind, und der bewegliche Festkörper (72) der dritten Festkörperanordnung (32) derart keilförmig ausgebildet ist, dass dieser in der zweiten Stellung flächig mit dem ersten und zweiten Oberflächenabschnitt (46, 58) der ersten und zweiten Festkörperanordnung (28, 30) in Kontakt steht, wobei die einander zugeordneten Oberflächenabschnitte (46, 58) vorzugsweise einen Winkel (α) von weniger als 60° oder weniger als 10° einschließen und die Oberfläche (44; 56) der ersten oder/und zweiten Festkörperanordnung (28; 30) besonders bevorzugt in der Art einer Mantelfläche einer Pyramide oder eines Pyramidenstumpfes geformt ist.

6. Wärmespeichersystem (2) nach einem der vorangehenden Ansprüche, **dadurch gekennzeichnet, dass** die erste Festkörperanordnung (28) einen ausgangsseitigen Festkörper (34) zur Erzielung des Festkörperkontakts mit der zweiten Festkörperanordnung (30) und mindestens eine in den Speicherraum (20) hervorstehende Strebe (36) zur Kontaktierung des Speichermediums aufweist, wobei an der Strebe (36) vorzugsweise hervorstehende Rippen oder Flügel (40) angeordnet sind, die besonders bevorzugt von einem mehrfach, gegebenenfalls in einer Ebene, gebogenen langgestreckten Element (42) gebildet sind, oder/und die zweite Festkörperanordnung (30) einen Festkörper (54) zur Ausbildung der Innenseite (66) eines Fluidbehälters, vorzugsweise zur Ausbildung der Innenseite des Kessels eines Verdampfers, oder einer Fluidleitung zum Erwärmen eines Fluids aufweist.

7. Wärmespeichersystem (2) nach einem der vorangehenden Ansprüche, **dadurch gekennzeichnet, dass** die Heizeinrichtung (80) als induktive Heizeinrichtung (80) ausgebildet ist oder mindestens eine sich in den Speicherraum (20) erstreckende erwärmbare Heizstrebe (82) aufweist, die sich vorzugsweise aus dem Speicherraum (20) in einen abgeschlossenen oder/und evakuierten Induktionsraum (86) erstreckt, in dem die Heizstrebe (82) mit einem Induktor (88) zusammenwirkt.

8. Wärmespeichersystem (2) nach einem der vorangehenden Ansprüche, **dadurch gekennzeichnet, dass** das Wärmespeichersystem (2) als Latentwärmespeichersystem (2) mit einem Phasenwechselmaterial als Wärmespeichermedium ausgebildet ist, wobei das Wärmespeichermedium vorzugsweise ein Salz oder ein Salzgemisch ist, oder/und die erste Festkörperanordnung (28) oder/und die zweite Festkörperanordnung (30) oder/und die dritte Festkörperanordnung (32) von einem oder mehreren Festkörpern aus Metall gebildet ist oder/und zusätzlich zu dem veränderbaren Festkörperkontakt ein dauerhafter Festkörperkontakt zwischen der ersten und zweiten Festkörperanordnung (28, 30) über mindestens ein weiteres Bauteil (92) des Wärmespeichersystems (2) besteht, das vorzugsweise als Isolator ausgebildet ist oder/und eine geringere Wärmeleitfähigkeit als der mindestens eine Festkörper der ersten und zweiten Festkörperanordnung (28, 30) aufweist.

9. Verfahren zur Wärmespeicherung und -entnahme, vorzugsweise zum Betrieb eines Wärmespeichersystems (2) nach einem der Ansprüche 1 bis 8, mit den Verfahrensschritten
Bereitstellung eines mit einer ersten Festkörperanordnung (28) in Kontakt stehenden Wärmespeichermediums und einer zweiten Festkörperanordnung (30),
Erwärmen des Wärmespeichermediums durch eine Heizeinrichtung (80),
Veränderung eines Festkörperkontakts zwischen der ersten Festkörperanordnung (28) und der zweiten Festkörperanordnung (30) unter Erhöhung oder Verringerung eines Wärmestroms von der ersten Festkörperanordnung (28) zu der zweiten Festkörperanordnung (30), wobei der Festkörperkontakt zwischen der ersten Festkörperanordnung (28) und der zweiten Festkörperanordnung (30) aufgehoben und mittelbar unter Zwischenschaltung eines oder mehrerer Festkörper (72, 74, 76, 78) erzeugt wird, und
Entnahme von Wärme an der zweiten Festkörperanordnung (30).

10. Verfahren nach Anspruch 9, **dadurch gekennzeichnet, dass** der Festkörperkontakt zwischen der ersten Festkörperanordnung (28) und der zweiten Festkörperanordnung (30) schrittweise oder kontinuierlich verändert oder/und durch Veränderung einer Anzahl der Festkörper (72, 74, 76, 78), die sowohl mit der ersten als auch mit der zweiten Festkörperanordnung (28, 30) in Kontakt stehen, oder/und durch Veränderung der Größe einer Kontaktfläche zwischen der ersten Festkörperanordnung (28) und der zweiten Festkörperanordnung (30) verändert wird oder/und die Entnahme von Wärme an der zweiten Festkörperanordnung (30) durch Erwärmung eines die zweite Festkörperanordnung (30) kontaktierenden Fluids erfolgt.

## Claims

1. A heat storage system (2) comprising a storage space (20), a heat storage medium in the storage space (20), a heating device (80) for heating the heat storage medium and an extraction device (26) for extracting heat from the heat storage medium, the extraction device (26) comprising a first solid body arrangement (28) contacting the heat storage medium and a second solid body arrangement (30), wherein a solid body contact between the first solid body arrangement (28) and the second solid body arrangement (30) can be modified thereby increasing or decreasing a heat flow from the first solid body arrangement (28) to the second solid body arrangement (30), **characterized in that** the solid body contact between the first solid body arrangement (28) and the second solid body arrangement (30) can be eliminated and is or can be established indirectly by interposing one or more solid bodies (72, 74, 76, 78).

2. The heat storage system (2) according to claim 1, **characterized in that** the solid body contact between the first solid body arrangement (28) and the second solid body arrangement (30) can be modified incrementally or continuously, or/and can be modified by modifying a quantity the solid bodies (72, 74, 76, 78) contacting the first and the second solid body arrangements (28, 30).

3. The heat storage system (2) according to any one of the claims 1 or 2, **characterized in that** the first solid body arrangement (28) and the second solid body arrangement (30) each comprise at least one surface (44, 56) by means of which the solid body contact is or can be established indirectly, wherein the surfaces (44, 56) are preferably disposed in a closed or/and evacuated contact space (68).

4. The heat storage system (2) according to claim 3, **characterized in that** a third solid body arrangement (32) having at least one displaceable solid body (72; 74; 76; 78) is provided and can be displaced or translationally shifted relative to the first and second solid body arrangements (28, 30) from a first position in which the displaceable solid body (72; 74; 76; 78) does not contact any of the surfaces (44, 56) or contacts the surface of only one of the first and second solid body arrangements (28; 30) into a second position in which the displaceable solid body (72; 74; 76; 78) contacts the surfaces (44, 56) of the first and second solid body arrangement (28, 30), wherein the third solid body arrangement (32) preferably comprises at least two displaceable solid bodies (72, 74, 76, 78) displaceable independently of each other into the first or/and second position, or/and the at least one displaceable solid body (72; 74; 76; 78) is preferably disposed in the closed or/and evacuated contact space (68), and the first and second solid body arrangements (28, 30) are particularly preferably disposed fixed relative to each other or/and the surfaces (44, 56) thereof are permanently spaced apart from each other.

5. The heat storage system (2) according to claim 4, **characterized in that** the surface (44) of the first solid body arrangement (28) comprises at least one first surface segment (46) and the surface (56) of the second solid body arrangement (30) comprises at least one second surface segment (58) associated with each other and inclined relative to each other, and the displaceable solid body (72) of the third solid body arrangement (32) is implemented having a wedge shape, such that said body makes flat contact with the first and second surface segments (46, 58) of the first and second solid body arrangements (28, 30) in the second position, wherein the surface segments (46, 58) associated with each other preferably enclose an angle (α) of less than 60° or less than 10°, and the surface (44; 56) of the first or/and second solid body arrangement (28; 30) is particularly preferably shaped in the manner of a lateral surface of a pyramid or a frustrum of a pyramid.

6. The heat storage system (2) according to any one of the preceding claims, **characterized in that** the first solid body arrangement (28) comprises an outlet-side solid body (34) for establishing solid body contact with the second solid body arrangement (30) and comprises at least one strut (36) protruding into the storage space (20) for contacting the storage medium, wherein protruding ribs or fins (40) are preferably disposed on the strut (36) and implemented particularly preferably by a multiply curved, elongated element (42), optionally in one plane, or/and the second solid body arrangement (30) comprises a solid body (54) for implementing the inner side (66) of a fluid container, preferably for implementing the inner side of the boiler of an evaporator, or comprises a fluid line for heating a fluid.

7. The heat storage system (2) according to any one of the preceding claims, **characterized in that** the heating device (80) is an inductive heating device (80) or the heating device (80) comprises at least one heatable heating strut (82) extending into the storage space (20) and preferably extending out of the storage space (20) into a closed or/and evacuated induction space (86) in which the heating strut (82) interacts with an inductor (88).

8. The heat storage system (2) according to any one of the preceding claims, **characterized in that** the heat storage system (2) is implemented as a latent heat storage system (2) having a phase change material as the heat storage medium, wherein the heat storage medium is preferably a salt or a salt mixture, or/and the first solid body arrangement (28) or/and the second solid body arrangement (30) or/and the third solid body arrangement (32) is implemented by one or more solid bodies made of metal, or/and in addition to the modifiable solid body contact, a permanent solid body contact is present between the first and second solid body arrangements (28, 30) by means of at least one further component (92) of the heat storage system (2) preferably implemented as an insulator or/and having a lower thermal conductivity than the at least one solid body of the first and second solid body arrangements (28, 30).

9. A method for storing and extracting heat, preferably for operating a heat storage system (2) according to any one of the claims 1 through 8, having the method steps
providing a heat storage medium contacting a first solid body arrangement (28) and a second solid body arrangement (30),
heating the heat storage medium by a heating device (80),
modifying a solid body contact between the first solid body arrangement (28) and the second solid body arrangement (30) thereby increasing or decreasing a heat flow from the first solid body arrangement (28) to the second solid body arrangement (30),wherein the solid body contact between the first solid body arrangement (28) and the second solid body arrangement (30) is eliminated and established indirectly by interposing one or more solid bodies (72, 74, 76, 78), and
extracting heat at the second solid body arrangement (30).

10. The method according to claim 9, **characterized in that** the solid body contact between the first solid body arrangement (28) and the second solid body arrangement (30) can be modified incrementally or continuously, or/and can be modified by modifying a quantity of the solid bodies (72, 74, 76, 78) contacting the first and the second solid body arrangements (28, 30), or/and by modifying the size of a contact surface between the first solid body arrangement (28) and the second solid body arrangement (30), or/and heat is extracted at the second solid body arrangement (30) by heating a fluid contacting the second solid body arrangement (30).

## Revendications

1. Système d'accumulation de chaleur (2) comprenant un espace d'accumulation (20), un milieu d'accumulation de chaleur dans l'espace d'accumulation (20), un dispositif de chauffage (80) destiné à chauffer le milieu d'accumulation de chaleur et un dispositif de prélèvement (26) destiné à prélever de la chaleur à partir du milieu d'accumulation de chaleur, le dispositif de prélèvement (26) comprenant un premier agencement (28) de corps solides qui est en contact avec le milieu d'accumulation de chaleur et un deuxième agencement (30) de corps solides, un contact de corps solides entre le premier agencement (28) de corps solides et le deuxième agencement (30) de corps solides pouvant être modifié par augmentation ou diminution d'un flux de chaleur du premier agencement (28) de corps solides vers le deuxième agencement (30) de corps solides, **caractérisé en ce que** le contact de corps solides entre le premier agencement (28) de corps solides et le deuxième agencement (30) de corps solides peut être supprimé et peut être créé ou est créé indirectement par interposition d'un ou de plusieurs corps solides (72, 74, 76, 78).

2. Système d'accumulation de chaleur (2) selon la revendication 1, **caractérisé en ce que** le contact de corps solides entre le premier agencement (28) de corps solides et le deuxième agencement (30) de corps solides peut être modifié graduellement ou continuellement ou/et par modification d'un nombre des corps solides (72, 74, 76, 78) qui sont en contact aussi bien avec le premier qu'avec le deuxième agencement (28, 30) de corps solides.

3. Système d'accumulation de chaleur (2) selon l'une des revendications 1 ou 2, **caractérisé en ce que** le premier agencement (28) de corps solides et le deuxième agencement (30) de corps solides présentent chacun au moins une surface (44, 56) par laquelle le contact de corps solides peut être créé ou est créé indirectement, les surfaces (44, 56) étant de préférence disposées dans un espace de contact (68) clos ou/et mis sous vide.

4. Système d'accumulation de chaleur (2) selon la revendication 3, **caractérisé en ce qu'**il est prévu un troisième agencement (32) de corps solides comportant au moins un corps solide mobile (72 ; 74 ; 76 ; 78) qui peut être déplacé ou décalé en translation par rapport aux premier et deuxième agencements (28, 30) de corps solides à partir d'une première position dans laquelle le corps solide mobile (72 ; 74 ; 76 ; 78) n'est en contact avec aucune des surfaces (44, 56) ou est en contact avec la surface (44 ; 56) d'un seul des premier et deuxième agencements (28 ; 30) de corps solides, dans une deuxième position dans laquelle le corps solide mobile (72 ; 74 ; 76 ; 78) est en contact avec les surfaces (44, 56) du premier et du deuxième agencement (28, 30) de corps solides, le troisième agencement (32) de corps solides comportant de préférence au moins deux corps solides mobiles (72, 74, 76, 78) qui peuvent être déplacés indépendamment l'un de l'autre dans la première ou/et la deuxième position, ou/et le, au moins un, corps solide mobile (72 ; 74 ; 76 ; 78) étant de préférence disposé dans l'espace de contact (68) clos ou/et mis sous vide et le premier et le deuxième agencement (28, 30) de corps solides étant, de manière particulièrement préférée, disposés de manière immobile l'un par rapport à l'autre ou/et leurs surfaces (44, 56) étant espacées durablement l'une de l'autre.

5. Système d'accumulation de chaleur (2) selon la revendication 4, **caractérisé en ce que** la surface (44) du premier agencement (28) de corps solides présente au moins une première section (46) de surface et la surface (56) du deuxième (30) agencement de corps solides présente au moins une deuxième section (58) de surface, qui sont coordonnées entre elles et disposées inclinées l'une par rapport à l'autre, et le corps solide mobile (72) du troisième agencement (32) de corps solides est réalisé en forme de coin de sorte que, dans la deuxième position, celui-ci est en contact à plat avec la première et la deuxième section (46, 58) de surface du premier et du deuxième agencement (28, 30) de corps solides, les sections (46, 58) de surface coordonnées entre elles formant de préférence un angle (cc) de moins de 60° ou de moins de 10° et la surface (44 ; 56) du premier ou/et du deuxième agencement (28 ; 30) de corps solides étant formée de manière particulièrement préférée à la manière d'une surface d'enveloppe d'une pyramide ou d'un tronc de pyramide.

6. Système d'accumulation de chaleur (2) selon l'une des revendications précédentes, **caractérisé en ce que** le premier agencement (28) de corps solides comporte un corps solide (34) côté sortie destiné à réaliser le contact de corps solides avec le deuxième agencement (30) de corps solides et au moins une entretoise (36) faisant saillie dans l'espace d'accumulation (20) pour établir le contact avec le milieu d'accumulation, des nervures ou ailes (40) de préférence en saillie étant disposées sur l'entretoise (36), qui, de manière particulièrement préférée, sont formées par un élément allongé (42) cintré plusieurs fois, le cas échéant dans un plan, ou/et le deuxième agencement (30) de corps solides comporte un corps solide (54) destiné à former la face intérieure (66) d'un réservoir de fluide, de préférence afin de former la face intérieure de la cuve d'un évaporateur, ou d'une conduite de fluide destinée au chauffage d'un fluide.

7. Système d'accumulation de chaleur (2) selon l'une des revendications précédentes, **caractérisé en ce que** le dispositif de chauffage (80) est conçu comme un dispositif de chauffage inductif (80) ou comporte au moins une barre de chauffe (82) pouvant être chauffée et s'étendant dans l'espace d'accumulation (20), qui s'étend de préférence hors de l'espace d'accumulation (20) dans un espace d'induction (86) clos ou/et mis sous vide, dans lequel la barre de chauffe (82) coopère avec un inducteur (88).

8. Système d'accumulation de chaleur (2) selon l'une des revendications précédentes, **caractérisé en ce que** le système d'accumulation de chaleur (2) est conçu comme un système d'accumulation de chaleur latente (2) avec un matériau à changement de phase comme milieu d'accumulation de chaleur, le milieu d'accumulation de chaleur étant de préférence un sel ou un mélange de sels, ou/et le premier agencement (28) de corps solides ou/et le deuxième agencement (30) de corps solides ou/et le troisième agencement (32) de corps solides est/sont formé(s) par un ou plusieurs corps solides en métal ou/et, en plus du contact de corps solides variable, il existe un contact de corps solides durable entre le premier et le deuxième agencement (28, 30) de corps solides par l'intermédiaire d'au moins un autre composant (92) du système d'accumulation de chaleur (2), qui de préférence est conçu comme un isolateur ou/et présente une conductivité thermique inférieure à celle de l'au moins un corps solide du premier et du deuxième agencement (28, 30) de corps solides.

9. Procédé pour l'accumulation et le prélèvement de chaleur, de préférence pour l'exploitation d'un système d'accumulation de chaleur (2) selon l'une des revendications 1 à 8, comprenant les étapes de procédé :
fournir un milieu d'accumulation de chaleur en contact avec un premier agencement (28) de corps solides, et un deuxième agencement (30) de corps solides,
chauffer le milieu d'accumulation de chaleur par un dispositif de chauffage (80),
modifier un contact de corps solides entre le premier agencement (28) de corps solides et le deuxième agencement (30) de corps solides par augmentation ou diminution d'un flux de chaleur du premier agencement (28) de corps solides vers le deuxième agencement (30) de corps solides, le contact de corps solides entre le premier agencement (28) de corps solides et le deuxième agencement (30) de corps solides étant supprimé et créé indirectement par interposition d'un ou de plusieurs corps solides (72, 74, 76, 78), et
prélever de la chaleur sur le deuxième agencement (30) de corps solides.

10. Procédé selon la revendication 9, **caractérisé en ce que** le contact de corps solides entre le premier agencement (28) de corps solides et le deuxième agencement (30) de corps solides est modifié graduellement ou continuellement ou/et par modification d'un nombre des corps solides (72, 74, 76, 78) qui sont en contact aussi bien avec le premier qu'avec le deuxième agencement (28, 30) de corps solides, ou/et par modification de la taille d'une surface de contact entre le premier agencement (28) de corps solides et le deuxième agencement (30) de corps solides ou/et par le prélèvement de chaleur sur le deuxième agencement (30) de corps solides en chauffant un fluide en contact avec le deuxième agencement (30) de corps solides.
